# EUROPEAN PATENT APPLICATION

(11) **EP 4 847 325 A1**
(43) Date of publication of application: **02.12.2026**
(21) Application number: 25744986.8
(22) Date of filing: 08.01.2025
(51) Int. Cl.: B60R 21/264, B01J 7/00

(54) **GAS GENERATOR**

(30) Priority: 24.01.2024 JP 2024008580
(71) Applicant: Nippon Kayaku Kabushiki Kaisha, Tokyo 100-0005 (JP)
(72) Inventor: HIRAOKA, Masaki, Himeji-shi, Hyogo 679-2123 (JP); SHIMAZU, Sho, Himeji-shi, Hyogo 679-2123 (JP)
(74) Representative: TBK
(86) International application number: PCT/JP2025/000339
(87) International publication number: WO 2025/158903

(57) **Abstract**

A gas generator (1A) includes at least a housing provided with an internal space partitioned into a gas generating agent accommodation chamber (S1) and a filter chamber, a gas generating agent (60) accommodated in the gas generating agent accommodation chamber (S1), an auto-ignition agent (61), and a coil spring (70). The coil spring (70) includes a first pressing portion (72a) located at a side of the gas generating agent (60), a second pressing portion (72b) located at a side of the auto-ignition agent (61), and a spring portion (71) located therebetween. The first pressing portion (72a) and the second pressing portion (72b) are configured in a shape of a plate as a whole. When viewed along an axial direction, the second pressing portion (72b) is larger in outer shape than the auto-ignition agent (61) and the spring portion (71) includes a constricted portion (73) smaller in outer shape than the first pressing portion (72a) and the second pressing portion (72b).

## Description

### TECHNICAL FIELD

The present invention relates to a gas generator incorporated in an air bag apparatus as a passenger protection apparatus equipped in a car and the like, and particularly to what is called a cylinder type gas generator having an elongated columnar outer geometry that is suitably incorporated into a side air bag apparatus and the like.

### BACKGROUND ART

From a point of view of protection of a driver and/or a passenger in a car, an air bag apparatus which is a passenger protection apparatus has conventionally widely been used. The air bag apparatus is equipped for the purpose of protecting a driver and/or a passenger against shock caused at the time of collision of a vehicle, and it receives a body of a driver or a passenger with the air bag serving as a cushion by instantaneously expanding and developing the air bag at the time of collision of a vehicle.

A gas generator is equipment which is incorporated in this air bag apparatus, an igniter therein being ignited in response to power feed caused by a control unit at the time of collision of a vehicle to thereby burn a gas generating agent with flame caused by the igniter and instantaneously generate a large amount of gas, and thus expands and develops an air bag.

Depending on a position of installation in a vehicle and the like or on specifications such as output of gas, gas generators of various constructions are available. A gas generator called a cylinder type gas generator represents one example. The cylinder type gas generator has an outer geometry in an elongated columnar shape and it is suitably incorporated in a side air bag apparatus, a curtain air bag apparatus, a knee air bag apparatus, or a seat cushion air bag apparatus.

Normally, in a cylinder type gas generator, an igniter is assembled at one end in an axial direction of a housing, and a gas generating agent accommodation chamber where a plurality of granular gas generating agents are accommodated is provided at a side of the one end.

A cylinder type gas generator in which an auto-ignition agent is further accommodated in a gas generating agent accommodation chamber has recently been known. The auto-ignition agent is an agent that self-ignites independently of activation of an igniter so that it serves not to induce an abnormal operation due to external heating of the cylinder type gas generator in case of fire or the like in a vehicle or the like equipped with an air bag apparatus incorporating the cylinder type gas generator.

For example, Japanese Patent Laying-Open No. 2022-102514 (PTL 1) discloses a cylinder type gas generator configured as above. In the cylinder type gas generator disclosed in this literature, a coil spring interposed between an auto-ignition agent and a gas generating agent elastically biases the auto-ignition agent and the gas generating agent so as to fix them inside a gas generating agent accommodation chamber.

### CITATION LIST

### PATENT LITERATURE

PTL 1: Japanese Patent Laying-Open No. 2022-102514

### SUMMARY OF INVENTION

### TECHNICAL PROBLEM

In connection with the cylinder type gas generator improved in safety by being provided with the auto-ignition agent as described above, reduction in size and weight and further simplified assembly operations have become important issues.

Therefore, the present invention was made in view of problems described above, and an object thereof is to provide a gas generator that achieves reduction in size and weight and more simplified assembly operations.

### SOLUTION TO PROBLEM

A gas generator based on the present invention includes a housing, a partition portion, a plurality of granular gas generating agents, an igniter configured to burn the gas generating agents, an auto-ignition agent self-igniting independently of activation of the igniter, and a coil spring. The housing is provided with a cylindrical circumferential wall portion, the circumferential wall portion including a portion that defines a gas generating agent accommodation chamber and a portion that defines a filter chamber where a filter is accommodated. The partition portion is located inside the housing, and serves as a partition between the gas generating agent accommodation chamber and the filter chamber in a space inside the housing in an axial direction of the circumferential wall portion. The gas generating agents are accommodated in the gas generating agent accommodation chamber. The igniter is assembled to one end of the housing in the axial direction, at a side of the gas generating agent accommodation chamber. The auto-ignition agent is accommodated in the gas generating agent accommodation chamber as being in contact with a main surface of the partition portion at a side facing the gas generating agent accommodation chamber. The coil spring is configured by winding a metal wire rod and interposed as being compressed between the auto-ignition agent and the gas generating agents. The coil spring includes a first pressing portion located at a side of the gas generating agents, a second pressing portion located at a side of the auto-ignition agent, and a spring portion located between the first pressing portion and the second pressing portion. The first pressing portion is configured by routing one end of the metal wire rod such that the first pressing portion as a whole is in a shape of a plate. The second pressing portion is configured by routing the other end of the metal wire rod such that the second pressing portion as a whole is in a shape of a plate. The gas generating agents are fixed inside the gas generating agent accommodation chamber by being biased by the spring portion toward the igniter with the first pressing portion being interposed. The auto-ignition agent is fixed inside the gas generating agent accommodation chamber by being biased by the spring portion toward the filter chamber with the second pressing portion being interposed. When viewed along the axial direction, an outer shape of the second pressing portion is larger than an outer shape of the auto-ignition agent. **In** the gas generator based on the present invention, when viewed along the axial direction, the spring portion includes a constricted portion smaller in outer shape than both of the first pressing portion and the second pressing portion.

### ADVANTAGEOUS EFFECTS OF INVENTION

According to the present invention, a gas generator that achieves reduction in size and weight and more simplified assembly operations can be provided.

### BRIEF DESCRIPTION OF DRAWINGS

Fig. 1 is a schematic diagram of a cylinder type gas generator according to an embodiment.
Fig. 2 is an enlarged view of the vicinity of an igniter shown in Fig. 1.
Fig. 3 is an enlarged view of a region III shown in Fig. 1.
Fig. 4 is a schematic diagram of a state before assembly of a coil spring shown in Fig. 1 to the cylinder type gas generator.
Fig. 5 is a schematic diagram of an auto-ignition agent and the coil spring shown in Fig. 1 viewed from a side of a filter chamber.
Fig. 6 is a partially enlarged view for illustrating exemplary arrangement and an exemplary posture of the auto-ignition agent.
Fig. 7 is a partially enlarged view of a cylinder type gas generator according to a first modification.
Fig. 8 is a partially enlarged view of a cylinder type gas generator according to a second modification.

### DESCRIPTION OF EMBODIMENTS

An embodiment of the present invention will be described hereinafter in detail with reference to the drawings. An embodiment shown below represents application of the present invention to a cylinder type gas generator incorporated in a side air bag apparatus. The same or common elements in an embodiment shown below have the same reference characters allotted in the drawings and description thereof will not be repeated.

### (Embodiment)

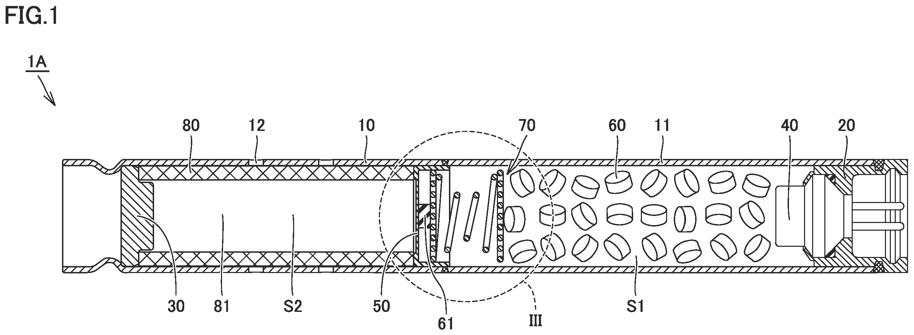

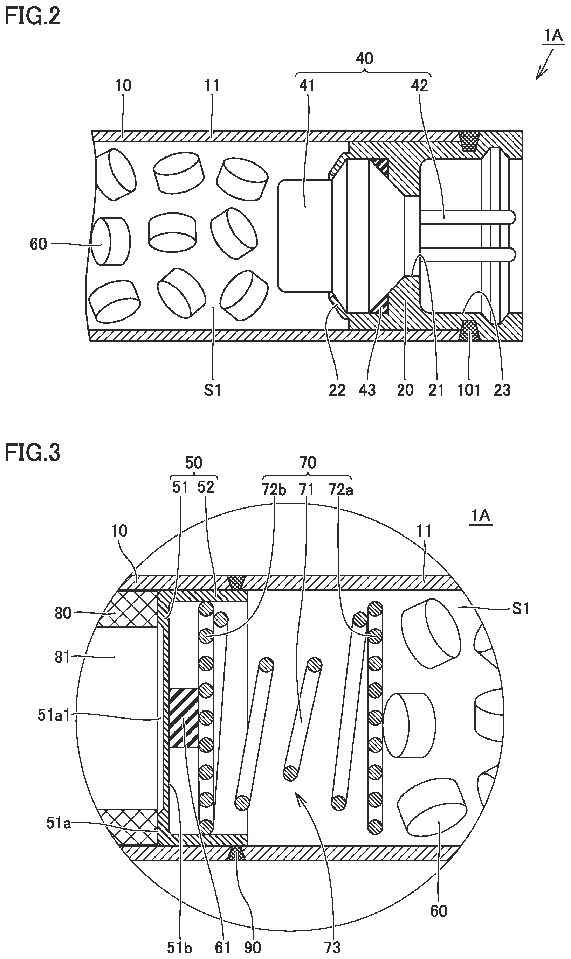

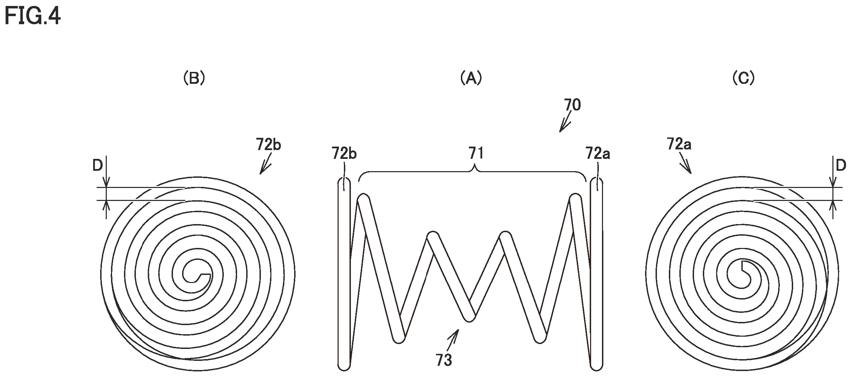

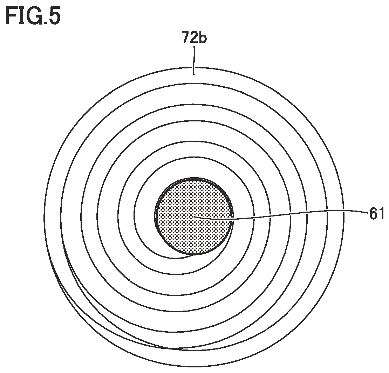

Fig. 1 is a schematic diagram of a cylinder type gas generator according to an embodiment. Fig. 2 is an enlarged view of the vicinity of an igniter shown in Fig. 1. Fig. 3 is an enlarged view of a region III shown in Fig. 1. Fig. 4 (A) is a schematic front view of a state before assembly of a coil spring shown in Fig. 1 to the cylinder type gas generator and Fig. 4 (B) and (C) is a schematic side view of the coil spring. Fig. 5 is a schematic diagram of an auto-ignition agent and the coil spring shown in Fig. 1 viewed from a side of a filter chamber. A construction of a cylinder type gas generator 1A according to the present embodiment will initially be described with reference to Figs. 1 to 5. For the sake of facilitated understanding, the auto-ignition agent is provided with a pattern in Fig. 5.

As shown in Figs. 1 to 3, cylinder type gas generator 1A has an elongated columnar outer geometry. Cylinder type gas generator 1A has an elongated substantially circular cylindrical housing having closed one and the other ends located in an axial direction. The housing includes a housing main body 10, a holder 20, a closing member 30, and a partition member 50. An outer shell of the housing is defined by housing main body 10, holder 20, and closing member 30.

Inside housing main body 10, holder 20, and closing member 30, an igniter 40, a plurality of granular gas generating agents 60 (which will also simply be referred to as a "gas generating agent" 60 below), an auto-ignition agent 61, a coil spring 70, a filter 80, and the like as internal components are accommodated, and additionally thereto, above-described partition member 50 which is also an internal component is arranged. In the housing, a gas generating agent accommodation chamber S1 and a filter chamber S2 are located. In gas generating agent accommodation chamber S1, gas generating agent 60, auto-ignition agent 61, and coil spring 70 among the internal components described above are accommodated. Filter 80 is accommodated in filter chamber S2.

Housing main body 10 implements a circumferential wall portion 11 of the housing and it is made of an elongated circular cylindrical member. Circumferential wall portion 11 is provided with an open end at each of opposing ends in the axial direction. Circumferential wall portion 11 includes both of a portion that defines gas generating agent accommodation chamber S1 and a portion that defines filter chamber S2.

Housing main body 10 may be formed from a member made of metal such as stainless steel, iron steel, an aluminum alloy, or a stainless alloy or from a circularly cylindrically formed press-formed product by press-working of a rolled steel plate represented by SPCE. Alternatively, housing main body 10 may be formed from an electric resistance welded tube represented by STKM.

In particular, when housing main body 10 is formed from a press-formed product of a rolled steel plate or an electric resistance welded tube, housing main body 10 can be formed more inexpensively and readily and with much lighter weight than when the housing main body is formed from a member made of metal such as stainless steel or iron steel.

Holder 20 and closing member 30 are formed from a member made of metal such as stainless steel, iron steel, an aluminum alloy, or a stainless alloy.

As shown in Figs. 1 and 2, holder 20 is formed from a substantially cylindrical member including a through portion 21 that extends along a direction in parallel to the axial direction of circumferential wall portion 11, and assembled to circumferential wall portion 11 to close one of a pair of open ends of circumferential wall portion 11. Specifically, holder 20 is fixed to circumferential wall portion 11 by joint between holder 20 and circumferential wall portion 11, for example, by welding or the like at a portion of contact therebetween or in the vicinity thereof while a part of the holder is inserted in the open end of circumferential wall portion 11.

A welded portion 101 that extends along a circumferential direction of the housing is thus provided at an axial end of the housing located at a side of the open end of circumferential wall portion 11. A gap between circumferential wall portion 11 and holder 20 is buried by welded portion 101. Therefore, the gap is sealed with welded portion 101 and airtightness at that portion can be secured. Electron beam welding, laser welding, resistance welding, and the like can suitably be used for welding between circumferential wall portion 11 and holder 20.

A structure for assembly of holder 20 to circumferential wall portion 11 is not limited to the assembly structure described above, and another assembly structure may be adopted. Airtightness between circumferential wall portion 11 and holder 20 in that case can be secured by providing an O ring or the like at an appropriate position.

As shown in Fig. 1, closing member 30 is made from a member substantially in a disc shape and assembled to circumferential wall portion 11 so as to close the other of the pair of open ends of circumferential wall portion 11. Specifically, while closing member 30 is located in the open end of circumferential wall portion 11 so that one axial end surface thereof abuts on filter 80, a prescribed position of circumferential wall portion 11 is decreased in diameter radially inward toward the vicinity of the other axial end surface of closing member 30, so that closing member 30 is fixed by swaging to circumferential wall portion 11. The other axial end of the housing is thus implemented by closing member 30.

Such fixing by swaging is called omnidirectional swaging in which circumferential wall portion 11 is substantially uniformly decreased in diameter radially inward. With this fixing by swaging, circumferential wall portion 11 is in direct contact with closing member 30, so that a gap is prevented from being provided therebetween.

A structure for assembly of closing member 30 to circumferential wall portion 11 is not limited to the assembly structure described above, and another assembly structure may be adopted. Alternatively, circumferential wall portion 11 and closing member 30 do not have to be separate members, and they may be implemented as one member in a shape of a cylinder with bottom.

As shown in Figs. 1 and 2, igniter 40 is assembled to the housing by being supported by holder 20. Igniter 40 is thus located at one axial end side of circumferential wall portion 11 when viewed from gas generating agent accommodation chamber S1. Igniter 40 serves to burn gas generating agent 60 and is arranged to face a space inside the housing.

Igniter 40 includes an ignition portion 41 and a pair of terminal pins 42. Ignition portion 41 includes a squib cup. Inside the squib cup, a resistor (bridge wire) is attached as being connected to the pair of terminal pins 42. The squib cup is filled with an ignition agent to surround or come in contact with the resistor. An enhancer agent may be loaded inside the squib cup as necessary.

A Nichrome wire or a resistance wire made of an alloy containing platinum and tungsten is generally used as the resistor. ZPP (zirconium potassium perchlorate), ZWPP (zirconium tungsten potassium perchlorate), lead tricinate, or the like is generally employed as the ignition agent. A composition composed of metal powders/oxidizing agent represented by B/KNO₃, B/NaNO₃, or Sr(NO₃)₂, a composition composed of titanium hydride/potassium perchlorate, a composition composed of B/5-aminotetrazole/potassium nitrate/molybdenum trioxide, or the like is employed as the enhancer agent.

Upon sensing collision, a prescribed amount of current flows in the resistor through terminal pin 42. Thus, Joule heat is generated in the resistor and the ignition agent starts burning. Thermal particles at a high temperature caused by burning cleave the squib cup where the ignition agent is accommodated. A time period from flow of a current in the resistor until activation of igniter 40 is generally not longer than 2 milliseconds in a case that the Nichrome wire is employed as the resistor.

Igniter 40 is fixed to holder 20 by a swaging portion 22 provided in holder 20. More specifically, holder 20 includes swaging portion 22 for fixing igniter 40 by swaging, at an axial end facing the space inside the housing. As swaging portion 22 described above is swaged while igniter 40 is located in through portion 21 and abuts on a portion of a wall portion that defines through portion 21, igniter 40 is fixed by being clamped in holder 20.

Igniter 40 is thus assembled to holder 20 such that ignition portion 41 is located as projecting toward the inside of the housing. Therefore, at the time of activation of igniter 40, the ignition agent is ignited to cleave the squib cup, and with the cleave, the squib cup opens.

A sealing member 43 formed from an O ring or the like is interposed between holder 20 and igniter 40. Sealing member 43 buries and seals a gap between holder 20 and igniter 40. According to such a configuration, airtightness at that portion can be secured. A structure for assembly of igniter 40 is not limited to the assembly structure using swaging portion 22 described above, and another assembly structure may be adopted.

A recess 23 contiguous to through portion 21 described above is provided at an axial end of holder 20 exposed to the outside. Recess 23 defines a female connector portion that receives a male connector (not shown) of a harness for connecting igniter 40 and a control unit (not shown) to each other. In recess 23, terminal pins 42 of igniter 40 are located as being exposed. The male connector is inserted in recess 23 as the female connector portion. Electrical conduction between a core of the harness and terminal pins 42 is thus achieved.

As shown in Figs. 1 and 3, partition member 50 that forms a part of the housing as described above is arranged at a prescribed position in the space in the housing. Partition member 50 is a member for partitioning the space in the housing into gas generating agent accommodation chamber S1 and filter chamber S2 in the axial direction of circumferential wall portion 11. Partition member 50 is thus located at a side of the other axial end of circumferential wall portion 11 when viewed from gas generating agent accommodation chamber S1.

Partition member 50 is in a shape of a circular cylinder with bottom, and formed from a member made of metal such as stainless steel, iron steel, an aluminum alloy, or a stainless alloy. Partition member 50 includes a partition portion 51 in a form of a flat plate arranged to be orthogonal to the axial direction of circumferential wall portion 11 to serve as a partition of the space inside the housing as described above, and an annular wall portion 52 in a form of a cylindrical wall erected from a circumferential edge of partition portion 51 toward gas generating agent accommodation chamber S1. In the present embodiment, annular wall portion 52 is in a circular shape when viewed along the axial direction.

Partition member 50 is arranged such that a first main surface 51a at a side facing filter chamber S2, of a pair of main surfaces of partition portion 51 abuts on filter 80. An outer circumferential surface of annular wall portion 52 abuts on an inner circumferential surface of circumferential wall portion 11.

A score 51a1 is provided in first main surface 51a of partition portion 51. Score 51a1 serves to provide an opening as a result of rupture of partition portion 51 with increase in internal pressure in gas generating agent accommodation chamber S1 as a result of burning of gas generating agent 60, and it is provided, for example, as a plurality of grooves provided to radially intersect with one another. Score 51a1 is provided in a portion in filter 80 opposed to a hollow portion 81.

Partition member 50 is assembled by being joined to circumferential wall portion 11 while it is located in circumferential wall portion 11. More specifically, partition member 50 is fixed to circumferential wall portion 11 by being press-fitted into circumferential wall portion 11 and being joined by welding or the like at a portion of contact between annular wall portion 52 of partition member 50 and circumferential wall portion 11 or in the vicinity thereof.

Thus, in a portion of the housing where partition member 50 is located, a welded portion 90 that extends along the circumferential direction of the housing is provided. A gap between circumferential wall portion 11 and partition member 50 is buried by welded portion 90. Therefore, the gap is sealed with welded portion 90, and airtightness at that portion can be secured. Electron beam welding, laser welding, resistance welding, and the like can suitably be used for welding between circumferential wall portion 11 and partition member 50.

A structure for assembling partition member 50 to circumferential wall portion 11 is not limited to the assembly structure using press-fitting and welding described above, and another assembly structure may be adopted. Airtightness between circumferential wall portion 11 and partition member 50 in that case can be secured by providing an O ring or the like at an appropriate position.

In the space inside the housing, the plurality of granular gas generating agents 60, auto-ignition agent 61, and coil spring 70 are arranged in a space lying between holder 20 and partition member 50 (that is, gas generating agent accommodation chamber S1).

Coil spring 70 is arranged at a side in gas generating agent accommodation chamber S1 where partition member 50 is located. The plurality of granular gas generating agents 60 are arranged between holder 20 and coil spring 70. Auto-ignition agent 61 is arranged between partition portion 51 and coil spring 70 to abut on a second main surface 51b of partition portion 51 at a side facing gas generating agent accommodation chamber S1.

Gas generating agent 60 is an agent which is ignited by thermal particles produced as a result of activation of igniter 40 and produces gas as it burns. A non-azide-based gas generating agent is preferably employed as gas generating agent 60. Gas generating agent 60 is formed as a molding generally containing fuel, an oxidizing agent, and an additive.

For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of.

As the oxidizing agent, for example, basic metal salt such as basic copper nitrate and basic copper carbonate, perchlorate such as ammonium perchlorate or potassium perchlorate, nitrate containing cations selected from alkali metal, alkali earth metal, transition metal, and ammonia, or the like is made use of. As the nitrate, for example, sodium nitrate, potassium nitrate, or the like is suitably made use of.

As the additive, a binder, a slag formation agent, a combustion modifier, or the like is exemplified. As the binder, for example, an organic binder such as metal salt of carboxymethyl cellulose and stearate, or an inorganic binder such as synthetic hydrotalcite and Japanese acid clay can suitably be made use of. As the slag formation agent, silicon nitride, silica, Japanese acid clay, or the like can suitably be made use of. As the combustion modifier, a metal oxide, ferrosilicon, activated carbon, graphite, or the like can suitably be made use of.

A shape of a molding of gas generating agent 60 includes various shapes such as a particulate shape including a granule, a pellet, and a column, and a disc shape. Among columnar moldings, a molding with holes having through holes in the molding (such as a cylindrical shape with a single hole or a cylindrical shape with multiple holes) is also made use of. These shapes are preferably selected as appropriate depending on specifications of an air bag apparatus in which cylinder type gas generator 1A is incorporated, and for example, a shape optimal for the specifications is preferably selected by selecting a shape allowing change over time of a rate of generation of gas during burning of gas generating agent 60. In addition to a shape of gas generating agent 60, a size of a molding or an amount thereof for filling is preferably selected as appropriate, in consideration of a linear burning velocity, a pressure exponent, or the like of gas generating agent 60.

Auto-ignition agent 61 is composed of a pellet formed into a substantially columnar shape with a flat profile. Auto-ignition agent 61 is arranged at a position opposite (that is, on a side of filter 80) to a side where gas generating agent 60 is located when viewed from coil spring 70. Auto-ignition agent 61 is arranged at a central side in a radial direction of circumferential wall portion 11 in such a posture that an axial end surface thereof is in contact with a second pressing portion 72b of coil spring 70 which will be described later. The shape of auto-ignition agent 61 is not particularly limited to the substantially columnar shape with the flat profile and can variously be modified.

Auto-ignition agent 61 is held by being sandwiched between partition portion 51 of partition member 50 and coil spring 70. Auto-ignition agent 61 is thus separated from gas generating agent 60 by coil spring 70.

Auto-ignition agent 61 is an agent that self-ignites independently of activation of igniter 40. More specifically, auto-ignition agent 61 self-ignites at a temperature lower than a temperature of self-ignition of gas generating agent 60, and it serves not to induce an abnormal operation due to external heating of cylinder type gas generator 1A in case of fire or the like in a vehicle or the like equipped with an air bag apparatus incorporating cylinder type gas generator 1A.

As shown in Figs. 1 and 3 to 5, coil spring 70 is provided for the purpose of prevention of gas generating agent 60 formed from a molding from being crushed by vibration or the like, and formed by winding a metal wire rod. Coil spring 70 includes a first pressing portion 72a located at a side of gas generating agent 60, second pressing portion 72b located at a side of auto-ignition agent 61, and a spring portion 71 located therebetween.

Spring portion 71 is formed from a part obtained by helical winding of a metal wire rod. First pressing portion 72a is provided at an end of spring portion 71 at the side of gas generating agent 60. Second pressing portion 72b is provided at an end of spring portion 71 at the side of auto-ignition agent 61. First pressing portion 72a is in contact with gas generating agent 60. Second pressing portion 72b is in contact with auto-ignition agent 61.

As shown in Figs. 4 and 5, first pressing portion 72a is configured substantially in a shape of a disc as a whole by spirally routing one end of a metal wire rod at a prescribed interval D (see Fig. 4 (C)) when viewed along the axial direction. Second pressing portion 72b is configured substantially in a shape of a disc as a whole by spirally routing the other end of the metal wire rod at prescribed interval D (see Fig. 4 (B)) when viewed along the axial direction. By thus spirally routing the metal wire rod, first pressing portion 72a and second pressing portion 72b substantially in the shape of the disc can relatively easily be manufactured.

From a point of view of obtaining desired gas output in cylinder type gas generator 1A, it is important that interval D of the metal wire rod that forms first pressing portion 72a and second pressing portion 72b is considerably large. This is because, when interval D is small, in passage of gas generated in gas generating agent accommodation chamber S1 through first pressing portion 72a and second pressing portion 72b, a high flow resistance is produced in these portions and pressure loss becomes large. From a point of view of reliably fixing gas generating agent 60 and auto-ignition agent 61 inside gas generating agent accommodation chamber S1 with first pressing portion 72a and second pressing portion 72b, on the other hand, it is important that interval D is considerably small. This is because, when interval D is large, a surface that can be in contact with gas generating agent 60 is not formed in first pressing portion 72a and similarly a surface that can be in contact with auto-ignition agent 61 is not formed in second pressing portion 72b. From these points of view, the present embodiment is configured to set interval D to be not smaller than 1.0 mm and not larger than 1.4 mm.

When viewed along the axial direction, an outer shape (more specifically, an outer diameter) of second pressing portion 72b is configured to be larger than an outer shape of auto-ignition agent 61 (see, in particular, Fig. 5). In the present embodiment, the outer shape of second pressing portion 72b when viewed along the axial direction is substantially equal to an inner diameter of annular wall portion 52 of partition member 50. In the present embodiment, a size of the outer shape of first pressing portion 72a when viewed along the axial direction is equal to a size of the outer shape of second pressing portion 72b when viewed along the axial direction.

Coil spring 70 is compressed by being interposed between auto-ignition agent 61 and gas generating agent 60. Therefore, gas generating agent 60 is elastically biased toward igniter 40 while it is spaced apart from auto-ignition agent 61 by spring portion 71 with first pressing portion 72a being interposed. Gas generating agent 60 is thus fixed inside gas generating agent accommodation chamber S1. Therefore, according to such a configuration, gas generating agent 60 formed from the molding can be prevented from being crushed by vibration or the like.

Auto-ignition agent 61 is elastically biased toward partition portion 51 while it is spaced apart from gas generating agent 60 by spring portion 71 with second pressing portion 72b being interposed. Auto-ignition agent 61 is thus fixed inside gas generating agent accommodation chamber S1 as being in contact with second main surface 51b of partition portion 51.

Furthermore, in assembly of coil spring 70, coil spring 70 is sandwiched between auto-ignition agent 61 and gas generating agent 60 and compressed, so as to also accommodate variation in dimension among various components accommodated in the housing.

As shown in Figs. 1, 3, and 4, in cylinder type gas generator 1A according to the present embodiment, spring portion 71 of coil spring 70 includes a constricted portion 73 configured to be smaller in outer shape than both of first pressing portion 72a and second pressing portion 72b when viewed along the axial direction of circumferential wall portion 11. According to such a configuration, cylinder type gas generator 1A is reduced in size and weight, details of which will be described later.

As shown in Fig. 1, in the space in the housing, filter 80 is arranged in the space (that is, filter chamber S2) lying between closing member 30 and partition member 50. Filter 80 is formed from a circular cylindrical member provided with hollow portion 81 extending in a direction in parallel to the axial direction of housing main body 10. Filter 80 has one axial end surface abutting on closing member 30 and has the other axial end surface abutting on partition member 50.

Filter 80 functions as cooling means for cooling gas by removing heat from the gas at a high temperature when gas produced as a result of burning of gas generating agent 60 passes through this filter 80 and also functions as removal means for removing slag (residues) or the like contained in gas. As described above, by making use of filter 80 formed from a circular cylindrical member, a flow resistance against gas which flows through filter chamber S2 at the time of activation is suppressed and an efficient flow of gas can be achieved.

A filter formed from an aggregate of metal wire rods or metal mesh materials suitably made of stainless steel or iron steel can be made use of as filter 80. Specifically, a wire gauze of stocking stitch, a plain-woven wire gauze, an aggregate of crimped metal wire rods, or a material obtained by compressing the former with the use of a press can be made use of.

Alternatively, a material obtained by winding a perforated metal plate can also be made use of as filter 80. In this case, as the perforated metal plate, for example, expanded metal obtained by making staggered cuts in a metal plate and providing holes by widening the cuts to thereby work the metal plate in a mesh, hook metal obtained by perforating a metal plate and collapsing burrs caused around a periphery of the hole for flattening, or the like can be made use of.

A plurality of gas discharge openings 12 are provided along the circumferential direction and the axial direction in a portion of circumferential wall portion 11 defining filter chamber S2. The plurality of gas discharge openings 12 serve for guiding gas which has passed through filter 80 to the outside of the housing.

An operation of cylinder type gas generator 1A according to the present embodiment when it is activated will now be described with reference to Fig. 1.

With reference to Fig. 1, when a vehicle on which cylinder type gas generator 1A according to the present embodiment is mounted collides, collision is sensed by collision sensing means separately provided in the vehicle and igniter 40 is activated based thereon by current feed caused by a control unit separately provided in the vehicle.

When igniter 40 is activated, the ignition agent or the enhancer agent in addition thereto burns. Then, a pressure in ignition portion 41 increases, which cleaves the squib cup of ignition portion 41, and thermal particles resulting from burning of the ignition agent or the enhancer agent in addition thereto flow to the outside of ignition portion 41. Thermal particles which have reached gas generating agent 60 burn gas generating agent 60. A large amount of gas is thus produced in gas generating agent accommodation chamber S1.

Accordingly, a pressure in gas generating agent accommodation chamber S1 increases and an internal pressure in gas generating agent accommodation chamber S1 reaches a prescribed pressure, which causes a rupture in a portion of partition member 50 where score 51a1 is provided. An opening is thus provided in a portion of partition member 50 opposed to hollow portion 81 of filter 80, and gas generating agent accommodation chamber S1 and filter chamber S2 communicate with each other through the opening.

Accordingly, gas produced in gas generating agent accommodation chamber S1 flows into filter chamber S2 through the opening provided in partition member 50. Gas which has flowed into filter chamber S2 flows along the axial direction through hollow portion 81 of filter 80, thereafter changes its direction toward a radial direction, and passes through filter 80. At that time, heat is removed through filter 80 and gas is cooled, and slag contained in gas is removed by filter 80.

Gas which has passed through filter 80 is discharged to the outside of the housing through gas discharge opening 12 provided in circumferential wall portion 11. Discharged gas is introduced into an air bag provided adjacently to cylinder type gas generator 1A to thereby expand and develop the air bag. Auto-ignition agent 61 burns together with gas generating agent 60 when the gas generating agent burns.

In cylinder type gas generator 1A according to the present embodiment, as described above, spring portion 71 of coil spring 70 includes constricted portion 73.

In an example where coil spring 70 thus including constricted portion 73 is interposed between auto-ignition agent 61 and gas generating agent 60, not only repulsive force generated in coil spring 70 as a result of compressive deformation thereof but also repulsive force generated in coil spring 70 as a result of torsional deformation thereof are applied to auto-ignition agent 61 and gas generating agent 60. Namely, as compared with a coil spring that is equal in axial length to coil spring 70 and does not include the constricted portion (for example, a coil spring or the like having a substantially circular cylindrical outer shape), coil spring 70 including constricted portion 73 can apply to auto-ignition agent 61 and gas generating agent 60, pushing load greater by repulsive force involved with torsional deformation.

With cylinder type gas generator 1A including coil spring 70 capable of applying greater pushing load, gas generating agent accommodation chamber S1 can be filled with gas generating agent 60 at a higher density. Therefore, cylinder type gas generator 1A can be reduced in axial length and size and weight.

A method of increasing pushing load to be applied to the gas generating agent may include making a wire diameter of the coil spring larger or changing a material for the coil spring. Such a method, however, may lead to increase in cost for manufacturing the cylinder type gas generator. In this connection, in cylinder type gas generator 1A according to the present embodiment, without relying on such a method, pushing load by the coil spring can be increased by providing constricted portion 73, and consequently, cost for manufacturing cylinder type gas generator 1A can also be reduced.

With cylinder type gas generator 1A according to the present embodiment, assembly operations can also be facilitated.

Specifically, if auto-ignition agent 61 should be arranged at a prescribed position in the radial direction of circumferential wall portion 11 or the posture of auto-ignition agent 61 should be set to a prescribed posture in this arrangement in order to reliably clamp auto-ignition agent 61 between coil spring 70 and partition portion 51, much attention should be paid to operations to fix auto-ignition agent 61 to the inside of gas generating agent accommodation chamber S1, and consequently, assembly operations become complicated.

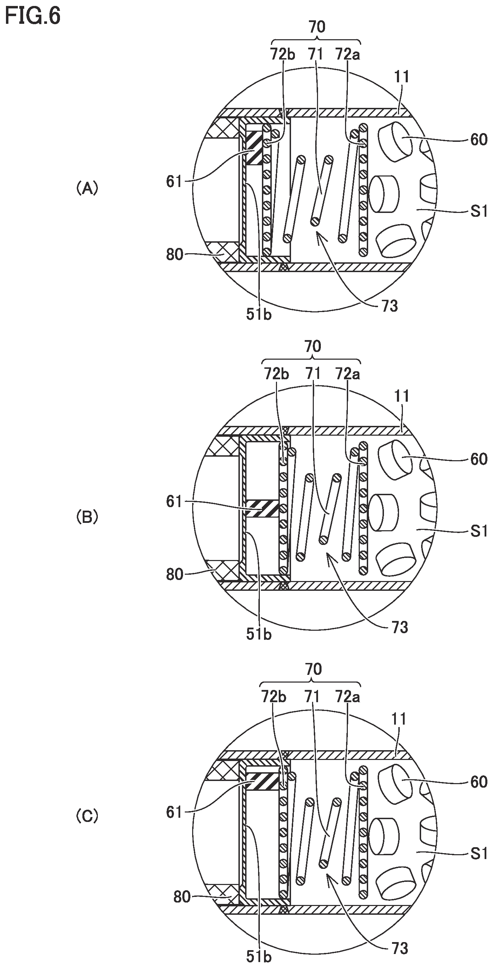

In this connection, in cylinder type gas generator 1A according to the present embodiment, as described above, when viewed along the axial direction of circumferential wall portion 11, second pressing portion 72b is configured to be larger in outer shape than auto-ignition agent 61. According to such a configuration, a degree of freedom of arrangement of auto-ignition agent 61 in the radial direction of circumferential wall portion 11 and a degree of freedom of the posture of auto-ignition agent 61 can be enhanced, which will be described in further detail with reference to Fig. 6 and Fig. 3 described previously.

Fig. 6 is a partially enlarged view for illustrating exemplary arrangement and an exemplary posture of the auto-ignition agent. In Fig. 6 (A), auto-ignition agent 61 substantially in a columnar shape with a flat profile is arranged at an outer side in the radial direction of circumferential wall portion 11 in such a posture that the axial end surface thereof is in contact with second pressing portion 72b. In Fig. 6 (B), auto-ignition agent 61 is arranged at a central side in the radial direction in such a posture that a circumferential surface thereof is in contact with second pressing portion 72b. In Fig. 6 (C), auto-ignition agent 61 is arranged at the outer side in the radial direction in such a posture that the circumferential surface thereof is in contact with second pressing portion 72b.

There are thus various arrangements and postures of auto-ignition agent 61 available. In cylinder type gas generator 1A according to the present embodiment, as described above, second pressing portion 72b is configured to be larger in outer shape than auto-ignition agent 61. Therefore, auto-ignition agent 61 can be fixed inside gas generating agent accommodation chamber S1 not only in the arrangement and the posture shown in Fig. 3 described previously (that is, the posture in which the axial end surface is in contact with second pressing portion 72b and the arrangement in which the auto-ignition agent is located at the central side in the radial direction) but also in the arrangement and the posture as shown, for example, in Fig. 6 (A) to (C). Therefore, the degree of freedom of arrangement and the degree of freedom of the posture of auto-ignition agent 61 can be enhanced, and consequently, operations for assembly of cylinder type gas generator 1A are facilitated.

Therefore, according to the configuration as above, a gas generator that achieves reduction in size and weight and facilitated assembly operations can be obtained.

In the present embodiment, first pressing portion 72a and second pressing portion 72b are equal to each other in size of the outer shape when viewed along the axial direction of circumferential wall portion 11, so that coil spring 70 is in a structure in symmetry with respect to the plane located at the center of coil spring 70 in the axial direction. According to such a configuration, distinction between the front and the back of coil spring 70 at the time of assembly thereof is not necessary, which also facilitates operations for assembly of cylinder type gas generator 1A.

In the present embodiment described above, an example in which first pressing portion 72a and second pressing portion 72b of coil spring 70 are configured substantially in a shape of a disc provided with a surface orthogonal to the axial direction as a whole by spiral routing of the metal wire rod at a prescribed interval when viewed along the axial direction of circumferential wall portion 11 is exemplified and described. First pressing portion 72a and second pressing portion 72b, however, may be configured, for example, in such a manner that a metal wire rod is arranged substantially in parallel at a prescribed interval and the first pressing portion and the second pressing portion are substantially in the shape of the disc as a whole.

In the present embodiment described above, an example in which the diameter of second pressing portion 72b when viewed along the axial direction of circumferential wall portion 11 is substantially equal to the inner diameter of annular wall portion 52 of partition member 50 is exemplified. The diameter of second pressing portion 72b, however, may be different from the inner diameter of annular wall portion 52. Furthermore, in the present embodiment, though an example where first pressing portion 72a and second pressing portion 72b are equal to each other in size of the outer shape when viewed along the axial direction is exemplified and described, they may be different from each other in size of the outer shape.

### (First and Second Modifications)

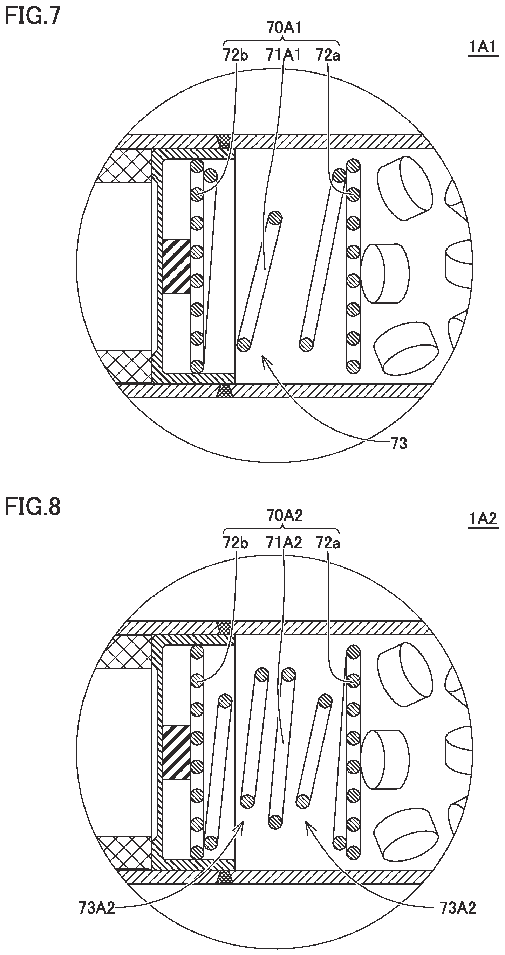

Figs. 7 and 8 are partially enlarged views of cylinder type gas generators according to first and second modifications, respectively. Cylinder type gas generators 1A1 and 1A2 according to the first and second modifications based on the embodiment described above will be described below with reference to Figs. 7 and 8. Figs. 7 and 8 show cylinder type gas generators 1A1 and 1A2 at positions corresponding to those in the partially enlarged view shown in Fig. 3, respectively.

As shown in Figs. 7 and 8, cylinder type gas generators 1A1 and 1A2 according to the first and second modifications are different from cylinder type gas generator 1A according to the embodiment described above only in configuration of the coil spring.

More specifically, cylinder type gas generator 1A1 according to the first modification is configured such that the number of turns of a spring portion 71A1 of a coil spring 70A1 is smaller than the number of turns of spring portion 71 of coil spring 70 in cylinder type gas generator 1A. More specifically, the number of turns of spring portion 71A1 is smaller by one than the number of turns of spring portion 71.

Cylinder type gas generator 1A2 according to the second modification is configured such that the number of constricted portions 73A2 formed in a spring portion 71A2 of a coil spring 70A2 is larger than the number of constricted portions 73 formed in spring portion 71 of coil spring 70 in cylinder type gas generator 1A. More specifically, a single constricted portion 73 is formed in spring portion 71, whereas a plurality of (more specifically, two) constricted portions 73A2 are formed in spring portion 71A2.

According to such a configuration as well, an effect in accordance with the effect described in the embodiment above is obtained, and a gas generator that achieves reduction in size and weight and facilitated assembly operations can be obtained.

### (Additional Aspects)

Characteristic features of the gas generators disclosed in the embodiment and the modifications thereof described above are summarized as below.

### [Additional Aspect 1]

A gas generator includes
a housing provided with a cylindrical circumferential wall portion, the circumferential wall portion including a portion that defines a gas generating agent accommodation chamber and a portion that defines a filter chamber where a filter is accommodated,
a partition portion located inside the housing, the partition portion serving as a partition between the gas generating agent accommodation chamber and the filter chamber in a space inside the housing in an axial direction of the circumferential wall portion,
a plurality of granular gas generating agents accommodated in the gas generating agent accommodation chamber,
an igniter assembled to one end of the housing in the axial direction at a side of the gas generating agent accommodation chamber, the igniter being configured to burn the gas generating agents,
an auto-ignition agent accommodated in the gas generating agent accommodation chamber as being in contact with a main surface of the partition portion at a side facing the gas generating agent accommodation chamber, the auto-ignition agent self-igniting independently of activation of the igniter, and
a coil spring configured by winding a metal wire rod, the coil spring being interposed as being compressed between the auto-ignition agent and the gas generating agents,
the coil spring includes a first pressing portion located at a side of the gas generating agents, a second pressing portion located at a side of the auto-ignition agent, and a spring portion located between the first pressing portion and the second pressing portion,
the first pressing portion is configured by routing one end of the metal wire rod such that the first pressing portion as a whole is in a shape of a plate,
the second pressing portion is configured by routing the other end of the metal wire rod such that the second pressing portion as a whole is in a shape of a plate,
the gas generating agents are fixed inside the gas generating agent accommodation chamber by being biased by the spring portion toward the igniter with the first pressing portion being interposed,
the auto-ignition agent is fixed inside the gas generating agent accommodation chamber by being biased by the spring portion toward the filter chamber with the second pressing portion being interposed,
when viewed along the axial direction, an outer shape of the second pressing portion is larger than an outer shape of the auto-ignition agent, and
when viewed along the axial direction, the spring portion includes a constricted portion smaller in outer shape than both of the first pressing portion and the second pressing portion.

### [Additional Aspect 2]

In the gas generator described in Additional Aspect 1,
a size of the outer shape of the first pressing portion when viewed along the axial direction is equal to a size of the outer shape of the second pressing portion when viewed along the axial direction.

### [Additional Aspect 3]

In the gas generator described in Additional Aspect 1 or 2,
when viewed along the axial direction, the first pressing portion and the second pressing portion are configured by spiral arrangement of the metal wire rod at a prescribed interval.

### [Additional Aspect 4]

In the gas generator described in any one of Additional Aspects 1 to 3,
the second pressing portion as a whole is configured in a shape of a disc,
the partition portion is provided with an annular wall portion in a circular shape erected from a circumferential edge of the partition portion toward the gas generating agent accommodation chamber, and
an outer diameter of the second pressing portion is substantially equal to an inner diameter of the annular wall portion.

### (Other Forms etc.)

The characteristic features shown in the embodiment of the present invention and the modifications thereof described above can naturally be combined with one another within the scope not departing from the gist of the present invention in light of the same.

In the embodiment of the present invention and the modifications thereof described above, an example in which the present invention is applied to a cylinder type gas generator incorporated in a side air bag apparatus is illustrated and described. Applications of the present invention, however, are not limited thereto and the present invention can be applied also to a cylinder type gas generator incorporated in a curtain air bag apparatus, a knee air bag apparatus, or a seat cushion air bag apparatus or what is called a T-shaped gas generator having an elongated outer geometry similarly to the cylinder type gas generator.

The embodiment and the modifications thereof disclosed herein are thus illustrative and non-restrictive in every respect. The technical scope of the present invention is delimited by the terms of the claims, and includes any modifications within the scope and meaning equivalent to the terms of the claims.

### REFERENCE SIGNS LIST

1A, 1A1, 1A2 cylinder type gas generator; 10 housing main body; 11 circumferential wall portion; 12 gas discharge opening; 20 holder; 21 through portion; 22 swaging portion; 23 recess portion; 30 closing member; 40 igniter; 41 ignition portion; 42 terminal pin; 43 sealing member; 50 partition member; 51 partition portion; 51a first main surface; 51a1 score; 51b second main surface; 52 annular wall portion; 60 gas generating agent; 61 auto-ignition agent; 70, 70A1, 70A2 coil spring; 71, 71A1, 71A2 spring portion; 72a first pressing portion; 72b second pressing portion; 73, 73A2 constricted portion; 80 filter; 81 hollow portion; 90, 101 welded portion; S1 gas generating agent accommodation chamber; S2 filter chamber.

## Claims

1. A gas generator comprising:
a housing provided with a cylindrical circumferential wall portion, the circumferential wall portion including a portion that defines a gas generating agent accommodation chamber and a portion that defines a filter chamber where a filter is accommodated;
a partition portion located inside the housing, the partition portion serving as a partition between the gas generating agent accommodation chamber and the filter chamber in a space inside the housing in an axial direction of the circumferential wall portion;
a plurality of granular gas generating agents accommodated in the gas generating agent accommodation chamber;
an igniter assembled to one end of the housing in the axial direction at a side of the gas generating agent accommodation chamber, the igniter being configured to burn the gas generating agents;
an auto-ignition agent accommodated in the gas generating agent accommodation chamber as being in contact with a main surface of the partition portion at a side facing the gas generating agent accommodation chamber, the auto-ignition agent self-igniting independently of activation of the igniter; and
a coil spring configured by winding a metal wire rod, the coil spring being interposed as being compressed between the auto-ignition agent and the gas generating agents, wherein
the coil spring includes
a first pressing portion located at a side of the gas generating agents,
a second pressing portion located at a side of the auto-ignition agent, and
a spring portion located between the first pressing portion and the second pressing portion,
the first pressing portion is configured by routing one end of the metal wire rod such that the first pressing portion as a whole is in a shape of a plate,
the second pressing portion is configured by routing the other end of the metal wire rod such that the second pressing portion as a whole is in a shape of a plate,
the gas generating agents are fixed inside the gas generating agent accommodation chamber by being biased by the spring portion toward the igniter with the first pressing portion being interposed,
the auto-ignition agent is fixed inside the gas generating agent accommodation chamber by being biased by the spring portion toward the filter chamber with the second pressing portion being interposed,
when viewed along the axial direction, an outer shape of the second pressing portion is larger than an outer shape of the auto-ignition agent, and
when viewed along the axial direction, the spring portion includes a constricted portion smaller in outer shape than both of the first pressing portion and the second pressing portion.

2. The gas generator according to claim 1, wherein
a size of the outer shape of the first pressing portion when viewed along the axial direction is equal to a size of the outer shape of the second pressing portion when viewed along the axial direction.

3. The gas generator according to claim 1, wherein
when viewed along the axial direction, the first pressing portion and the second pressing portion are configured by spiral arrangement of the metal wire rod at a prescribed interval.

4. The gas generator according to any one of claims 1 to 3, wherein
the second pressing portion as a whole is configured in a shape of a disc,
the partition portion is provided with an annular wall portion in a circular shape erected from a circumferential edge of the partition portion toward the gas generating agent accommodation chamber, and
an outer diameter of the second pressing portion is substantially equal to an inner diameter of the annular wall portion.
